# EUROPÄISCHE PATENTANMELDUNG

(11) **EP 3 696 730 A1**
(43) Veröffentlichungstag der Anmeldung: **19.08.2020**
(21) Anmeldenummer: 19156651.2
(22) Anmeldetag: 12.02.2019
(51) Int. Cl.: G06K 19/06, G06F 3/01, G06K 7/14

(54) **VERFAHREN UND VORRICHTUNG ZUM MARKIEREN VON MASCHINENBAUTEILEN**

(71) Anmelder: Inventio AG, 6052 Hergiswil (CH)
(72) Erfinder: CARRIERO, Stefano, 6330 Cham (CH)

(57) **Zusammenfassung**

Es werden ein Verfahren zum eindeutigen Markieren eines Bauteils (9) einer Maschine, insbesondere eines Bauteils (9) einer Personentransportanlage, sowie ein Verfahren zum Erkennen einer Identität eines Bauteils (9) einer Maschine beschrieben. Das erstgenannte Verfahren umfasst ein Anbringen eines maschinell optisch auslesbaren Identifikationscodes (1) auf eine Oberfläche des Bauteils (9), wobei der Identifikationscode (1) ein zweidimensionales Punktmuster (3) aus mikro-dimensionierten Punkten (5) aufweist und wobei eine Markierungsinformation in dem Identifikationscode (1) basierend auf lateralen Abweichungen einer Positionierung von Punkten (5) des zweidimensionalen Punktmusters (3) von einer gleichmäßig beabstandeten Matrix gespeichert ist. Das Verfahren zum Erkennen der Identität des Bauteils (9) umfasst dann ein Auslesen des an dem Bauteil (9) angebrachten Identifikationscodes (1) mittels eines optischen Scanners (11) und Erkennen der Identität des Bauteils (9) basierend auf dem Identifikationscode (1).

## Beschreibung

Die vorliegende Erfindung betrifft ein Verfahren und eine Vorrichtung zum eindeutigen Markieren von Bauteilen von Maschinen. Ferner betrifft die Erfindung ein Verfahren zum Erkennen einer Identität eines Bauteils einer Maschine. Außerdem betrifft die Erfindung ein Computerprogrammprodukt, welches dazu konfiguriert ist, das erfindungsgemäße Verfahren auszuführen, umzusetzen oder zu steuern, sowie ein computerlesbares Medium mit einem solchen darauf gespeicherten Computerprogrammprodukt.

Komplexe Maschinen können aus einer Vielzahl von einzelnen Bauteilen bestehen. Jedes einzelne Bauteil muss geplant, gefertigt, geprüft, gegebenenfalls gelagert und letztendlich montiert werden. In jedem dieser Schritte sollte im Allgemeinen die Identität des Bauteils bekannt sein, beispielsweise um festlegen zu können, gemäß welcher Spezifikationen das Bauteil geplant und gefertigt werden soll, welche Eigenschaften geprüft werden sollen, wie bzw. wo das Bauteil gelagert werden soll sowie in welcher Weise und an welcher Position das Bauteil schließlich montiert werden soll. Außerdem kann es aufgrund von Verschleiß oder Beschädigungen notwendig werden, Bauteile zu ersetzen. Auch in diesem Fall ist es typischerweise notwendig, eine Identität eines auszutauschenden Bauteils zuverlässig erkennen zu können, um es dann durch ein gleichwirkendes Ersatzteil ersetzen zu können.

Nachfolgend soll am Beispiel einer Fertigung oder Reparatur einer Personentransportanlage wie zum Beispiel eines Aufzugs, einer Fahrtreppe oder eines Fahrsteigs erläutert werden, welche Aufgaben bzw. Probleme während einer solchen Fertigung bzw. Reparatur beim Planen, Herstellen, Prüfen, Lagern, Montieren oder Ersetzen von Bauteilen auftreten können. Ähnliche Aufgaben- bzw. Problemstellungen können sich jedoch auch beim Austauschen von Bauteilen anderer komplexer Maschinen, beispielsweise im Rahmen einer Fertigung oder Reparatur eines Kraftfahrzeugs oder ähnlichem, stellen.

Personentransportanlagen bestehen als komplexe Maschinen aus einer Vielzahl von Bauteilen, die miteinander interagieren und zu einer Gesamtmaschine montiert werden müssen. Beim Planen einer Personentransportanlage wird typischerweise eine Stückliste (BOM - Bill Of Materials) erstellt, in der die für die Personentransportanlage benötigten Bauteile aufgelistet sind und gegebenenfalls Spezifikationen dieser Bauteile angegeben sind. Die Stückliste kann dabei große Bauteile wie beispielsweise einen Antriebsmotor, eine Aufzugkabine, Tragmittel oder Ähnliches umfassen, aber auch viele kleine Bauteile wie beispielsweise einzelne Schrauben, Schalter und Ähnliches beinhalten. Jedes Bauteil bzw. jeder Bauteiltyp muss dabei individuell identifiziert werden können. Nachdem die einzelnen Bauteile gefertigt und im Regelfall auf Einhaltung ihrer Spezifikationen hin geprüft wurden, müssen sie in der Personentransportanlage installiert werden. Auch bei diesen Schritten muss typischerweise jedes Bauteil bzw. jeder Bauteiltyp individuell identifiziert werden können. Ferner kann es insbesondere beim Reparieren oder Austauschen von Bauteilen wichtig sein, die Identität eines Bauteils zweifelsfrei feststellen zu können, um daraufhin ein geeignetes Ersatzteil bestellen und installieren zu können.

Manche Bauteile von Personentransportanlagen lassen sich hierbei bereits aufgrund ihres äußeren Erscheinungsbildes unterscheiden. Bei anderen Bauteilen kann es äußerlich nicht ohne weiteres unterscheidbare Varianten geben. Beispielsweise kann es verschiedene Schalter, Relais, Schrauben oder Ähnliches für eine Personentransportanlage geben, die äußerlich ähnlich oder sogar identisch aussehen, sich jedoch hinsichtlich ihrer Spezifikationen unterscheiden.

Es ist daher üblich, Bauteile einer Maschine in eindeutiger Weise zu kennzeichnen. Im einfachsten Fall kann einem Bauteil ein Name oder eine Zeichenfolge als Identifikationscode zugeordnet werden, welche auf einer Oberfläche des Bauteils sichtbar angebracht wird, sodass eine Person den Identifikationscode lesen kann. Im Regelfall wird jedoch bevorzugt, die Identität eines Bauteils automatisiert feststellen zu können. Daher ist bevorzugt, den Identifikationscode in einer maschinell auslesbaren Weise auszugestalten. Bisher wurde ein Identifikationscode beispielsweise mithilfe eines Strichcodes als eindimensionales Muster oder mithilfe eines sogenannten QR-Codes als zweidimensionales Muster ausgebildet und an dem Bauteil angebracht. Solche Identifikationscodes sind optisch mithilfe eines Scanners auslesbar.

Allerdings sind für eine Ausbildung solcher herkömmlicher Identifikationscodes relativ große freiliegende Flächen auf dem zu markierenden Bauteil nötig. Insbesondere bei kleinen Bauteilen kann somit eine Markierung zum Anbringen eines Identifikationscodes schwierig sein.

Es kann daher unter anderem ein Bedarf an einem alternativen Verfahren bestehen, mithilfe dessen Bauteile einfach und zuverlässig identifikationsgebend markiert werden können. Ein solches Verfahren sollte vorzugsweise auch für Bauteile mit wenig freiliegender bzw. frei verfügbarer Oberfläche einsetzbar sein. Ferner kann ein Bedarf an einem Verfahren zum Erkennen einer Identität eines Bauteils bestehen, mit welchem eine verfahrensgemäß angebrachte Markierung ausgelesen werden kann. Außerdem kann ein Bedarf an einer Vorrichtung bestehen, mithilfe derer man Ausführungsformen der genannten Verfahren ausführen, umsetzen oder steuern kann. Ferner kann ein Bedarf an einem Computerprogrammprodukt bestehen, mithilfe dessen solche Verfahren durchgeführt, umgesetzt oder gesteuert werden kann, sowie an einem computerlesbaren Medium mit einem solchen darauf gespeicherten Computerprogrammprodukt.

Einem solchen Bedarf kann durch den Gegenstand gemäß einem der unabhängigen Ansprüche entsprochen werden. Vorteilhafte Ausführungsformen sind in den abhängigen Ansprüchen sowie der nachfolgenden Beschreibung definiert.

Gemäß einem ersten Aspekt der Erfindung wird ein Verfahren zum eindeutigen Markieren eines Bauteils einer Maschine, insbesondere eines Bauteils einer Personentransportanlage, vorgeschlagen. Das Verfahren umfasst hierbei ein Anbringen eines maschinell optisch auslesbaren Identifikationscodes auf eine Oberfläche des Bauteils. Dabei weist der Identifikationscode ein zweidimensionales Punktmuster aus mikro-dimensionierten Punkten auf. Eine Markierungsinformation ist hierbei in dem Identifikationscode basierend auf lateralen Abweichungen einer Positionierung von Punkten des zweidimensionalen Punktmusters von einer gleichmäßig beabstandeten Matrix gespeichert.

Gemäß einem zweiten Aspekt der Erfindung wird ein Verfahren zum Erkennen einer Identität eines Bauteils einer Maschine vorgeschlagen. Das Bauteil ist hierbei zuvor mittels eines Verfahrens gemäß einer Ausführungsform des ersten Aspekts der Erfindung markiert worden. Das Verfahren umfasst dann ein Auslesen des an dem Bauteil angebrachten Identifikationscodes mittels eines optischen Scanners und ein Erkennen der Identität des Bauteils basierend auf dem Identifikationscode.

Gemäß einem dritten Aspekt der Erfindung wird eine Vorrichtung vorgeschlagen, welche dazu konfiguriert ist, das Verfahren gemäß einer Ausführungsform des ersten Aspekts oder des zweiten Aspekts der Erfindung auszuführen, zu steuern oder umzusetzen.

Gemäß einem vierten Aspekt der Erfindung wird ein Computerprogrammprodukt vorgeschlagen, welches computerlesbare Anweisungen aufweist, welche bei Ausführung auf einem prozessorgesteuerten Mobilgerät dieses dazu veranlassen, das Verfahren gemäß einer Ausführungsform des zweiten Aspekts der Erfindung auszuführen, zu steuern oder umzusetzen.

Gemäß einem fünften Aspekt der Erfindung wird ein computerlesbares Medium vorgeschlagen, auf dem ein Computerprogrammprodukt gemäß einer Ausführungsform des dritten Aspekts der Erfindung gespeichert ist.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Wie einleitend bereits angedeutet, werden Bauteile für eine Maschine bisher häufig mit maschinenlesbaren Strichcodes oder QR-Codes markiert, um die Bauteile und/oder ihre Spezifikationen einfach maschinell identifizieren zu können. In dem Strichcode bzw. QR-Code kann hierbei eine Identifikation (ID) und/oder Spezifikationseigenschaften in Form von Zahlen- und/oder Ziffernfolgen abgelegt sein. Solche Strichcodes bzw. QR-Codes können mithilfe von optischen Scannern ausgelesen werden, die lokale Helligkeits- oder Farbunterschiede erkennen und ein daraus resultierendes Signal analysieren können. Allerdings sind solche Strichcodes bzw. QR-Codes mit relativ großflächigen Mustern ausgebildet. Dementsprechend muss für die Anbringung eines solchen Strichcodes bzw. QR-Codes relativ viel freie Fläche auf einem zu markierenden Bauteil zur Verfügung stehen.

Insbesondere um auch kleine Bauteile bzw. Bauteile mit wenig frei verfügbarer Oberfläche markieren zu können, wird vorgeschlagen, eine andere Art von Identifikationscodes an der Oberfläche eines Bauteils anzubringen. Speziell wird vorgeschlagen, einen Identifikationscode einzusetzen, der mit maschinellen Mitteln in optischer Weise ausgelesen werden kann und der eine sehr hohe Informationsdichte ermöglicht, sodass auf einer sehr kleinen Fläche genügend Information zum eindeutigen Markieren des Bauteils untergebracht werden kann.

Ein solcher spezieller Identifikationscode kann als zweidimensionales Punktmuster ausgebildet sein. Das Punktmuster soll hierbei aus sehr kleinen Punkten zusammengesetzt sein, bei denen jeder einzelne Punkt Abmessungen im Sub-Millimeter-Bereich, d.h. im Bereich von einigen zehn bis einigen hundert Mikrometern, aufweisen soll und daher hierin als "mikro-dimensionierter" Punkt bezeichnet wird. Die einzelnen Punkte sind dabei meist unauffällig und mit dem bloßen Auge oft kaum erkennbar.

Informationen können in einem solchen Punktmuster anhand einer speziellen Positionierung der Punkte codiert werden. Insbesondere kann eine Information aufgrund von lateralen Abweichungen einer Positionierung der Punkte des zweidimensionalen Punktmusters von einer gleichmäßig beabstandeten Matrix codiert sein. Anders ausgedrückt kann sich die Positionierung der Punkte, je nachdem, welche Informationen codiert werden soll, unterscheiden, wobei ein Einfluss auf den Informationsgehalt für einen jeden der Punkte dadurch modifiziert werden kann, dass der jeweilige Punkt in einem Abstand neben und/oder oberhalb bzw. unterhalb einer Referenzposition angeordnet ist. Die Referenzpositionen sollen sich hierbei in Form einer gleichmäßig beabstandeten Matrix, oder anders ausgedrückt an Kreuzungspunkten eines Gitters aus gleichmäßig beabstandeten Linien, angeordnet sein.

Diese Art von Identifikationscode ist für andere Anwendungszwecke bereits bekannt und wird teilweise als "Optical Identification" (OID) bezeichnet. OID kann als Methode eingesetzt werden, um beispielsweise Nummern in Mustern aus Punkten, beispielsweise schwarzen Quadraten, zu codieren. Ein solches Muster kann dann auf eine Oberfläche beispielsweise gedruckt werden und die darin enthaltene Kodierung von dort mittels eines geeigneten Lesegeräts zu einem späteren Zeitpunkt ausgelesen werden. Obwohl die Punkte zumindest bei genauem Hinsehen mit dem bloßen Auge erkennbar sein können, kann das Kodierungsmuster allenfalls marginal mit anderen optisch dargestellten Inhalten an der jeweiligen Oberfläche interferieren. Mit anderen Worten kann das Kodierungsmuster optisch hinter anderen optisch dargestellten Informationsinhalten an einer Oberfläche zurücktreten bzw. sogar darin verborgen werden.

Vorzugsweise ist der Identifikationscode derart kleinflächig ausbildbar, dass er sich über eine Fläche von weniger als 25 mm2, das heißt beispielsweise weniger als 5 x 5 mm2, erstreckt. Eine komprimierte Darstellung des Identifikationscodes auf einer Fläche von weniger als 5 mm² oder sogar weniger als 2 mm², insbesondere einer Fläche von etwa 1 mm² oder weniger, ist möglich. Ein Einsatz des beschriebenen speziellen Identifikationscodes ermöglicht somit ein Markieren von Bauteilen auf einer sehr kleinen freiliegenden Oberfläche.

Jeder der Punkte des Punktmusters kann hierbei eine Fläche von weniger als 0,25 mm² aufweisen. Insbesondere können die Punkte kleiner als 0,5 x 0,5 mm² sein. Vorzugsweise sind die Punkte mit einer Fläche von weniger als 0,1 mm² (d.h. ca. 0,3 x 0,3 mm²) und stärker bevorzugt weniger als 0,01 mm² (d.h. ca. 0,1 x 0,1 mm²) oder sogar weniger als 0,003 mm² (d.h. ca. 0,05 x 0,05 mm²) sogar noch wesentlich kleiner. Kleine Punktgrößen von bis zu etwa 0,05 x 0,05 mm² oder sogar noch kleiner sind technisch einfach umzusetzen. Mit einem Punktmuster aus derart kleinen Punkten kann Information auf engster Fläche komprimiert codiert werden. Außerdem können die kleinen Punkte bzw. sogar das gesamte Punktmuster unauffällig auf freiliegenden Flächen platziert werden.

Das Punktmuster kann wenigstens 4 x 4 Punkte aufweisen. Das Punktmuster kann somit mit mindestens 16 Pixeln aufgebaut sein. Im Regelfall und um komplexere Informationen codieren zu können, wird das Punktmuster jedoch deutlich mehr Punkte aufweisen. Beispielsweise kann ein gesamtes Punktmuster aus mehreren Untereinheiten, welche jeweils über 4 x 4 Punkte oder mehr verfügen, zusammengesetzt sein. Das gesamte Punktmuster kann mehrere Zeilen und/oder Spalten mit solchen Untereinheiten umfassen.

Aufgrund der Möglichkeit, jeden der Punkte innerhalb eines zugehörigen Pixels an verschiedenen Positionen anordnen zu können, kann selbst mit einer relativ geringen Anzahl von Pixeln eine hohe Anzahl von unterschiedlichen Informationsgehalten codiert werden. Beispielsweise können selbst für den Fall, dass lediglich 8 von 16 Pixeln für die eigentliche Kodierung herangezogen werden und in jedem Pixel lediglich vier mögliche Positionierungen für einen darin darzustellenden Punkt vorgesehen werden, (4⁸-1 =) 65535 unterschiedliche Informationsgehalte dargestellt werden.

Gemäß einer Ausführungsform kann der Identifikationscode einen sogenannten Uniform Resource Identifier (URI) einer Datenquelle codieren, wobei in der Datenquelle Informationen betreffend das markierte Bauteil gespeichert sind.

Unter einem URI kann ein Identifikator verstanden werden, der aus einer Zeichenfolge besteht, die zur Identifizierung einer abstrakten oder physischen Ressource dient. URIs werden zur Bezeichnung von Ressourcen (wie Webseiten, sonstigen Dateien, Aufruf von Webservices, aber auch z. B. E-Mail-Empfängern) im Internet und dort vor allem im World Wide Web (WWW) eingesetzt.

Ein derart ausgestalteter Identifikationscode kann somit beispielsweise die Adresse einer Datenquelle eindeutig codieren. Die Datenquelle kann beispielsweise ein über ein Netzwerk verfügbarer Server oder eine Datenwolke (Cloud) sein, in dem weitergehende Informationen über das markierte Bauteil gespeichert sind, sodass diese Informationen durch eine drahtgebundene oder drahtlose Datenübermittlung von der kodierten Adresse abgerufen werden können.

Im Falle von Bauteilen einer Personentransportanlage kann die Datenquelle beispielsweise ein Server sein, der von einem Hersteller von Bauteilen der Personentransportanlage betrieben und/oder gepflegt wird. Auf dem Server können dann Informationen zu den von dem Hersteller angebotenen Bauteilen bereitgehalten werden. Durch Angabe einer eindeutigen URI können dann Informationen zu einem konkreten Bauteil von dem Server abgerufen werden.

Gemäß einer Ausführungsform kann der Identifikationscode in eine von einem Menschen optisch auslesbare Information, welche an der Oberfläche des Bauteils angebracht wird, integriert sein.

Mit anderen Worten kann der Informationscode mithilfe eines Musters aus kleinen Punkten aufgebaut werden, die in einer gröber dargestellten anderen, ebenfalls optisch auslesbaren Information integriert sind. Der Informationscode kann somit für einen menschlichen Betrachter unauffällig in andere, für den Menschen einfach erkennbare Information aufgenommen werden. Beispielsweise kann eine Zeichenfolge, ein Wort, ein Logo, ein Piktogramm oder Ähnliches auf einer Oberfläche des zu markierenden Bauteils aufgebracht sein und in diese von einem Menschen erkennbare Information zusätzlich der lediglich maschinell optisch auslesbare Identifikationscode integriert werden.

Gemäß einer Ausführungsform kann der Identifikationscode auf einer Klebeetikette aufgebracht sein und die Klebeetikette an die Oberfläche des Bauteils geklebt werden.

Anders ausgedrückt kann der Identifikationscode zunächst nicht direkt an dem zu markierenden Bauteil angebracht werden, sondern vorab auf eine separat zu fertigende Klebeetikette aufgebracht werden. Eine solche Klebeetikette kann selbstklebend sein. Klebeetiketten können einfach herzustellen und/oder einfach mit dem darzustellenden Identifikationscode zu bedrucken sein. Anschließend kann die Klebeetikette einfach an die Oberfläche des zu markierenden Bauteils angehaftet werden.

Alternativ kann gemäß einer Ausführungsform der Identifikationscode direkt an der Oberfläche des Bauteils aufgedruckt, aufgelasert oder eingraviert werden.

Beispielsweise können die Punkte, die den Identifikationscode bilden, durch Siebdruck, Tintenstrahldruck oder Ähnliches direkt auf eine freiliegende Oberfläche des Bauteils aufgedruckt werden. Alternativ kann die Oberfläche des Bauteils mit einem Laser punktuell modifiziert werden, beispielsweise um deren Farbe und/oder Reflektivität lokal zu verändern. Als weitere Alternative können die den Identifikationscode bildenden Punkte eingraviert werden, beispielsweise durch kleinflächige mechanische Bearbeitung oder ein lokales Abtragen von Material beispielsweise durch Laserverdampfung oder Laserablation.

Nachdem ein Bauteil mit dem zuvor beschriebenen Verfahren markiert wurde, kann der aufgebracht Identifikationscode im Rahmen eines Verfahrens gemäß dem zweiten Aspekt der Erfindung dazu genutzt werden, um die Identität des Bauteils eindeutig erkennen zu können. Hierzu braucht lediglich der an dem Bauteil angebrachte Identifikationscode mittels eines optischen Scanners ausgelesen werden. Anschließend kann die Identität des Bauteils basierend auf dem ausgelesenen Identifikationscode erkannt werden.

Beispielsweise kann gemäß einer Ausführungsform dieses Verfahrens der Identifikationscode einen Uniform Resource Identifier (URI) einer Datenquelle wie weiter oben beschrieben codieren. In der Datenquelle können Informationen betreffend das markierte Bauteil gespeichert sein. Basierend auf dem ausgelesenen Identifikationscode kann dann die Datenquelle kontaktiert und die Informationen betreffend das markierte Bauteil von der Datenquelle heruntergeladen werden.

Eine beispielsweise für einen Menschen verständliche Dekodierung des Identifikationscodes und/oder die basierend auf diesem von der externen Datenquelle heruntergeladenen Informationen betreffend das markierte Bauteil können eventuell auf einem Bildschirm dargestellt werden.

Beispielsweise kann der Scanner, mit dem der Identifikationscode ausgelesen werden kann, ergänzend über einen Bildschirm verfügen, auf dem die heruntergeladenen Informationen dargestellt werden können. Alternativ kann der Scanner mit einem separaten Gerät, welches über einen Bildschirm verfügt, drahtgebunden oder drahtlos kommunizieren und diesem Gerät den Identifikationscode oder darauf basierend erlangte Informationen zur Visualisierung derselben übermitteln. Die betreffenden Informationen können somit einem menschlichen Nutzer wie beispielsweise einem eine Personentransportanlage reparierenden Wartungstechniker in einer für ihn einfach verständlichen Weise dargestellt werden.

Insbesondere kann der Identifikationscode mittels einer als der optische Scanner wirkenden Kamera eines individualisierten prozessorgesteuerten Mobilgeräts ausgelesen werden.

Mit anderen Worten kann anstatt eines speziell für diesen Zweck entwickelten optischen Scanners ein individualisiertes prozessorgesteuertes Mobilgerät zum Auslesen des Identifikationscodes verwendet werden, indem mit der Kamera eines solchen Mobilgeräts ein Foto des Identifikationscodes aufgenommen wird und dieses durch geeignete Bildverarbeitung analysiert wird, um den Identifikationscode auslesen zu können. Die Kamera sollte für diesen Anwendungsfall eine ausreichend hohe Auflösung von beispielsweise mehreren Megapixeln aufweisen, um die einzelnen Punkte in dem Identifikationscode sowie deren präzise Positionierung erkennen und unterscheiden zu können.

Unter einem individualisierten prozessorgesteuerten Mobilgerät kann dabei ein portables Gerät verstanden werden, dass im Regelfall von einer einzelnen Person genutzt wird und von dieser für ihre persönlichen Zwecke speziell angepasst werden kann. Das Mobilgerät verfügt dabei über einen Prozessor, mithilfe dessen Programme beispielsweise in Form von Applikationen (Apps) ausgeführt werden können. Beispielsweise kann der Besitzer des Mobilgeräts individuell für sich auf seinem Mobilgerät benötigte Applikationen installieren. Insbesondere kann ein solches Mobilgerät ein intelligent programmierbares Mobiltelefon (Smartphone) oder ein portabler Computer (Laptops, Notebook, etc.) sein.

Typischerweise verfügt ein solches Mobilgerät über einen Datenspeicher, in dem Programme und/oder Daten gespeichert werden können. Außerdem verfügt ein solches Mobilgerät typischerweise über einen Bildschirm, vorzugsweise einen berührungsempfindlichen Bildschirm, auf dem beispielsweise der decodierte Identifikationscode oder mithilfe dessen heruntergeladene zusätzliche Informationen dargestellt werden können. Außerdem verfügt das Mobilgerät meist über eine Datenschnittstelle, über die drahtgebunden oder drahtlos Daten über ein Netzwerk von einem externen Server oder einer Datenwolke heruntergeladen werden können.

In einer solchen Ausgestaltung kann beispielsweise ein Wartungstechniker, wenn er eine Personentransportanlage inspiziert, mithilfe seines Smartphones unter Verwendung von dessen Kamera den auf einem Bauteil angebrachten Identifikationscode auslesen. Daraufhin kann sich der Wartungstechniker Informationen zu dem Bauteil aus einer externen Datenquelle herunterladen und ansehen. Gegebenenfalls kann der Wartungstechniker den ausgelesenen Identifikationscode mithilfe seines Smartphones auch an andere Stellen, zum Beispiel einen Server in einem Überwachungszentrum, übermitteln.

Das Mobilgerät kann dahingehend programmierbar sein, dass es mithilfe eines speziellen Computerprogrammprodukts gemäß einer Ausführungsform des vierten Aspekts der Erfindung bzw. einer App dazu in die Lage versetzt werden kann, Ausführungsformen des hierin beschriebenen Verfahrens gemäß einer Ausführungsform des zweiten Aspekts der Erfindung auszuführen, zu steuern oder umzusetzen. Das Computerprogrammprodukt kann dabei in einer beliebigen, für das Mobilgerät verständlichen Computersprache programmiert sein.

Das Computerprogrammprodukt kann auf einem computerlesbaren Medium gemäß einer Ausführungsform des fünften Aspekts der Erfindung wie einem Datenträger gespeichert sein. Ein solches computerlesbares Medium kann portabel sein. Beispielsweise kann das computerlesbare Medium eine CD, eine DVD, ein Flashspeicher oder Ähnliches sein. Alternativ kann das Computerprogrammprodukt auf einem stationären Computer bzw. Server gespeichert sein, von dem es heruntergeladen werden kann. Der Server kann Teil einer Datenwolke (Cloud) sein. Das Herunterladen des Computerprogrammprodukts kann über ein Netzwerk wie beispielsweise das Internet erfolgen.

Es wird daraufhingewiesen, dass einige der möglichen Merkmale und Vorteile der Erfindung hierin mit Bezug auf unterschiedliche Ausführungsformen des Verfahrens zum Markieren eines Bauteils einerseits und eines Verfahrens zum Erkennen einer Identität eines Bauteils andererseits sowie einer hierfür einsetzbaren Vorrichtung beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt einen Identifikationscode, wie er im Rahmen eines erfindungsgemäßen Verfahrens zum Markieren von Bauteilen eingesetzt werden kann.
Fig. 2 zeigt ein erfindungsgemäß markiertes Bauteil, dessen Identität im Rahmen eines erfindungsgemäßen Verfahrens erkannt werden kann.

Die Figuren sind lediglich schematisch und nicht maßstabsgetreu. Gleiche Bezugszeichen bezeichnen in den verschiedenen Figuren gleiche oder gleichwirkende Merkmale.

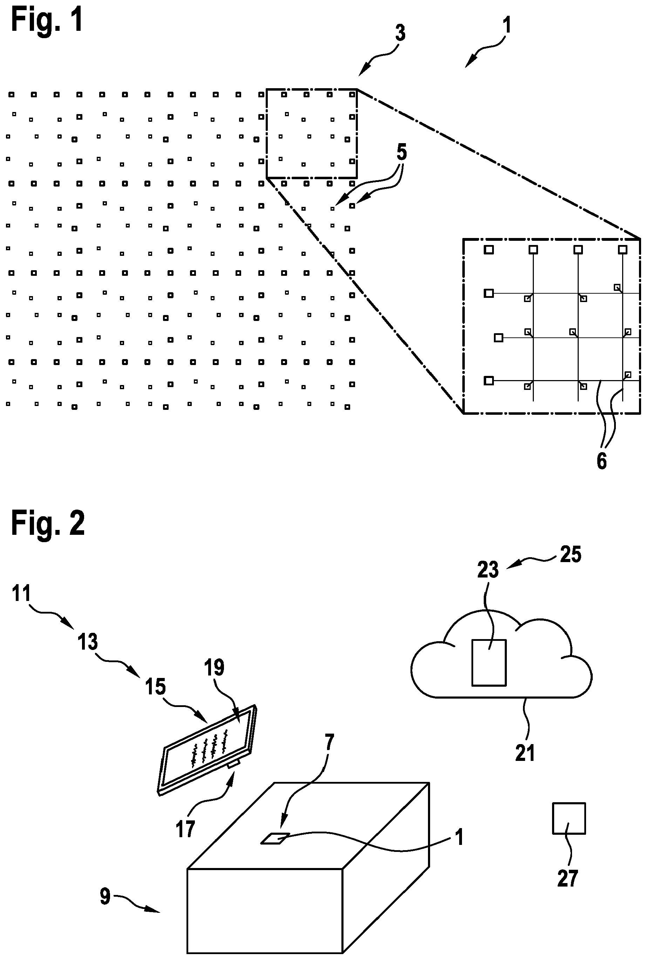

Fig. 1 zeigt einen Identifikationscode 1, wie er zum Markieren eines Bauteils einer Maschine verwendet werden kann. Der Identifikationscode 1 ist als 2-dimensionales Punktmuster 3 aus mikro-dimensionierten Punkten 5 ausgebildet. In dem Identifikationscode 1 ist eine Markierungsinformation basierend auf lateralen Abweichungen einer Positionierung von Punkten 5 des zweidimensionalen Punktmusters 3 von einer gleichmäßig beabstandeten Matrix gespeichert. Der Identifikationscode 1 kann auch als Optische IDentifikation (OID) bezeichnet werden.

Als mögliche Ausgestaltung eines OID kann beispielhaft vorgeschlagen werden, eine Information mithilfe eines Musters aus 16 Pixeln in Form der Punkte 5 zu codieren. Das Muster kann sich über eine quadratische Fläche von 1 mm x 1 mm erstrecken. Die Pixel haben jeweils Abmessungen von 0,05 mm x 0,05 mm. Die Pixel der ersten Reihe und ersten Spalte werden verwendet, um ein Grid zu definieren. Indem das dritte Pixel in der ersten Spalte einen geringfügigen Versatz bekommt, kann die Orientierung des Musters bestimmt werden. Die verbleibenden Pixel sind nicht mit dem 4 x 4-Grid, wie es durch die zuvor genannten Pixel definiert ist, ausgerichtet. Stattdessen ist ein quarternärer Wert der verbleibenden Pixel definiert durch die räumliche Abweichung von einem virtuellen Kreuzungspunkt gleichmäßig beabstandeten Linien 6, d.h. von einer regelmäßig beabstandeten Matrix. Dabei kann beispielsweise eine Anordnung eines Punktes 5 unten rechts einen Wert "0" wiedergeben, eine Anordnung eines Punktes unten links einen Wert "1" wiedergeben, eine Anordnung eines Punktes oben links einen Wert "2" wiedergeben und eine Anordnung eines Punktes oben rechts einen Wert "3" wiedergeben. Von diesen neun Pixeln kann beispielsweise das oberste linke Pixel als Prüfbit für eine Checksumme oder Parität dienen. Die anderen Bits können reihenweise von oben links nach unten rechts ausgelesen werden. Eine weitergehende Erläuterung dieser Ausgestaltung des OID kann unter "https://github.com/entropia/tip-toi-reveng/wiki/oid-(optical-id)-and-codes" gefunden werden.

Wie in Fig. 2 beispielhaft veranschaulicht, kann das Punktmuster 3 des Identifikationscodes 1 auf eine Klebeetikette 7 aufgedruckt werden und die Klebeetikette 7 dann auf eine Oberfläche eines zu markierenden Bauteils 9 aufgeklebt werden. Alternativ kann das Punktmuster 3 direkt auf die Oberfläche des Bauteils 9 aufgedruckt, aufgelasert oder eingraviert werden.

Mithilfe eines Scanners 11 oder einer als Scanner einsetzbaren Kamera 17 eines individualisierten prozessorgesteuerten Mobilgeräts 13 wie einem Smartphone 15 kann der Identifikationscode 1 dann maschinell optisch ausgelesen werden. Eine in dem Identifikationscode 1 codierte Information kann daraufhin beispielsweise auf einem Bildschirm 19 des Mobilgeräts 13 ausgegeben werden.

Alternativ oder ergänzend kann die in dem Identifikationscode 1 codierte Information einen Uniform Resource Identifier (URI) einer Datenquelle 25 angeben. Eine solche Datenquelle 25 kann beispielsweise ein in einer Datenwolke 21 befindlicher externer Server 23 sein. In dieser Datenquelle 25 können weitere Informationen betreffend das markierte Bauteil 9 gespeichert sein. Nachdem der Identifikationscode 1 ausgelesen und der URI decodiert wurde, kann der Scanner 11 bzw. das Mobilgerät 13 beispielsweise über eine drahtlose Datenschnittstelle Kontakt mit dem als Datenquelle 25 angegebenen Server 23 aufnehmen und von dort die weitergehenden Informationen über das Bauteil 9 herunterladen. Diese Informationen können dann beispielsweise wiederum auf dem Bildschirm 19 oder an anderer Stelle ausgegeben werden.

Als weitere Alternative oder Ergänzung kann der decodierte Identifikationscode 1 von dem Scanner 11 bzw. dem Mobilgerät 13 beispielsweise an einen proprietären externen Server 27 eines Unternehmens weitergeleitet werden, welches das Bauteil 9 herstellt oder für dessen Wartung verantwortlich ist oder welches die Maschine herstellt oder wartet, in der dieses Bauteil 9 aufgenommen ist. Beispielsweise im Falle eines Defekts an einem Bauteil 9 kann somit ein mit einer Reparatur oder Wartung beauftragter Techniker mithilfe des Scanners 11 bzw. des Mobilgeräts 13 den Identifikationscode 1 auslesen und entsprechende Information direkt an Dritte übermitteln, beispielsweise um dort für die Bereitstellung eines passenden Ersatzteils sorgen zu können.

Insbesondere für den Einsatz bei Personentransportanlagen können die hierin vorgeschlagenen Verfahren zum Markieren von Bauteilen 9 bzw. zum Erkennen einer Identität eines Bauteils basierend auf einer entsprechenden Markierung verschiedene Vorteile bringen. Zum Beispiel kann ein Bauteil 9 einer Personentransportanlage, nachdem es mit dem Identifikationscode 1 markiert wurde, beispielsweise während eines Herstellungsprozesses jederzeit identifiziert werden. Hierzu können beispielsweise entlang einer Produktionsstraße oder eines Produktions-Fördergürtels an gewünschten Stellen geeignete OID-Scanner 11 vorgesehen werden. Im späteren Feldeinsatz kann ein Feldtechniker dann im einfachsten Fall mit der Kamera 17 seines Smartphones 15 unter Verwendung einer hierfür entwickelten App das Bauteil 9 der Personentransportanlage einfach identifizieren und beispielsweise direkt über die App ein passendes Ersatzteil ordern.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Identifikationscode
- 3: Punktmuster
- 5: Punkt
- 7: Klebeetikette
- 9: Bauteil
- 11: Scanner
- 13: Mobilgerät
- 15: Smartphone
- 17: Kamera
- 19: Bildschirm
- 21: Datenwolke
- 23: Server
- 25: Datenquelle
- 27: proprietärer Server

## Patentansprüche

1. Verfahren zum eindeutigen Markieren eines Bauteils (9) einer Maschine, insbesondere eines Bauteils (9) einer Personentransportanlage, wobei das Verfahren umfasst:
Anbringen eines maschinell optisch auslesbaren Identifikationscodes (1) auf eine Oberfläche des Bauteils (9), wobei der Identifikationscode (1) ein zweidimensionales Punktmuster (3) aus mikro-dimensionierten Punkten (5) aufweist und wobei eine Markierungsinformation in dem Identifikationscode (1) basierend auf lateralen Abweichungen einer Positionierung von Punkten (5) des zweidimensionalen Punktmusters (3) von einer gleichmäßig beabstandeten Matrix gespeichert ist.

2. Verfahren nach Anspruch 1, wobei sich der Identifikationscode (1) über eine Fläche von weniger als 25 mm², vorzugsweise weniger als 5 mm² und stärker bevorzugt weniger als 2 mm2, erstreckt.

3. Verfahren nach einem der vorangehenden Ansprüche, wobei jeder der Punkte (5) des Punktmusters (3) eine Fläche von weniger als 0,25 mm², vorzugsweise weniger als 0,1 mm² und stärker bevorzugt weniger als 0,01 mm², aufweist.

4. Verfahren nach einem der vorangehenden Ansprüche, wobei das Punktmuster (3) wenigstens 4 x 4 Punkte aufweist.

5. Verfahren nach einem der vorangehenden Ansprüche, wobei der Identifikationscode (1) einen Uniform Resource Identifier URI einer Datenquelle codiert, wobei in der Datenquelle Informationen betreffend das markierte Bauteil (9) gespeichert sind.

6. Verfahren nach einem der vorangehenden Ansprüche, wobei der Identifikationscode (1) in eine von einem Menschen optisch auslesbare Information, welche an der Oberfläche des Bauteils (9) angebracht wird, integriert ist.

7. Verfahren nach einem der vorangehenden Ansprüche, wobei der Identifikationscode (1) auf einer Klebeetikette (7) aufgebracht ist und die Klebeetikette (7) an die Oberfläche des Bauteils (9) geklebt wird.

8. Verfahren nach einem der vorangehenden Ansprüche, wobei der Identifikationscode (1) an der Oberfläche des Bauteils (9) aufgedruckt, aufgelasert oder eingraviert wird.

9. Verfahren zum Erkennen einer Identität eines Bauteils (9) einer Maschine, wobei das Bauteil (9) mittels eines Verfahrens gemäß einem der Ansprüche 1 bis 8 markiert wurde, wobei das Verfahren umfasst:
Auslesen des an dem Bauteil (9) angebrachten Identifikationscodes (1) mittels eines optischen Scanners (11) und Erkennen der Identität des Bauteils (9) basierend auf dem Identifikationscode (1).

10. Verfahren nach Anspruch 9, wobei der Identifikationscode (1) einen Uniform Resource Identifier URI einer Datenquelle (25) codiert, wobei in der Datenquelle (25) Informationen betreffend das markierte Bauteil (9) gespeichert sind, und wobei basierend auf dem ausgelesenen Identifikationscode (1) die Datenquelle (25) kontaktiert und die Informationen betreffend das markierte Bauteil (9) von der Datenquelle (25) heruntergeladen werden.

11. Verfahren nach einem der Ansprüche 9 und 10, wobei eine Dekodierung des Identifikationscodes (1) und/oder basierend auf dem Identifikationscode (1) aus einer externen Datenquelle (25) heruntergeladene Informationen betreffend das markierte Bauteil (9) auf einem Bildschirm (19) dargestellt werden.

12. Verfahren nach einem der Ansprüche 9 bis 11, wobei der Identifikationscode (1) mittels einer als der optische Scanner (11) wirkenden Kamera (17) eines individualisierten prozessorgesteuerten Mobilgeräts (13) ausgelesen wird.

13. Vorrichtung, welche dazu konfiguriert ist, das Verfahren gemäß einem der Ansprüche 1 bis 12 auszuführen, zu steuern oder umzusetzen.

14. Computerprogrammprodukt, aufweisend computerlesbare Anweisungen, welche bei Ausführung auf einem prozessorgesteuerten Mobilgerät (13) dieses dazu veranlassen, das Verfahren gemäß einem der Ansprüche 9 bis 12 auszuführen, zu steuern oder umzusetzen.

15. Computerlesbares Medium mit einem darauf gespeicherten Computerprogrammprodukt gemäß Anspruch 14.
